# EUROPEAN PATENT APPLICATION

(11) **EP 1 747 723 A1**
(43) Date of publication of application: **31.01.2007**
(21) Application number: 05256549.6
(22) Date of filing: 21.10.2005
(51) Int. Cl.: A01N 59/16, C01G 9/02, C01G 5/00, C04B 35/453, C04B 35/64, A01P 1/00, A61L 2/16

(54) **An inorganic antimicrobial agent comprising zinc oxides and silver ions loaded in crystal lattices of the said zinc oxides and preparing method thereof**

(30) Priority: 29.07.2005 CN 200510021350
(71) Applicant: Southwest Jiaotong University, Chengdu Sichuan 610031 (CN); Advanced Technology and Crystal Co. Ltd, The Second Ring Road of Chengdu Sichuan 610031 (CN)
(72) Inventor: Zhou, Zuowan, Chengdu Sichuan 610031 (CN); Wang, Kai, Chengdu Sichuan 610031 (CN); Liu, Guomei, Chengdu Sichuan 610031 (CN); Luo, Yanbin, Chengdu Sichuan 610036 (CN)
(74) Representative: Copsey, Timothy Graham

(57) **Abstract**

An antimicrobial agent comprising semiconducting zinc oxides and silver ions loaded into the crystal lattices of the said zinc oxides through a solid solution processing at high temperature. A method for preparing such an antimicrobial agent.

## Description

### FIELD OF THE INVENTION

This invention is related to an antimicrobial agent and the preparing method thereof. Particularly, it related to an antimicrobial agent comprising zinc oxides and silver ions loaded in the crystals lattice of the said zinc oxides and the method for preparing the same. It will be applied to the fields of chemical engineering and new material technology.

### BACKGROUND OF THE INVENTION

At present, the silver-contained antimicrobial agents has been become one of the most important inorganic antimicrobial due to the fact that the silver ion has prominent property of broad spectra, high activity and good efficiency for antibacterial, and low drug resistance. It has been widely used in producing food packages, decoration materials, medical apparatus and instruments, textiles, medical-sanitary wares, daily necessaries, domestic applications, communications equipments and so on.

However, the silver ion has high chemical activity and normally will easily be reduced to silver of simple substance with black color turn to silver oxide with brownish black color, which means discolouring. The discolouration not only reduces the amount of the silver irons as a main activity centre of the antibacterial, and decreases the antibacterial activity and weakens the durability, but also causes the colour-contamination of the applied products. So, controlling and lowering the colour-changing phenomenon seems to be the most important and key problem in preparing the silver-contained antimicrobial products.

Generally, in order to resolve the discolouration problem and the insufficient durability of the silver-contained antimicrobial agent, a measure usually to be taken for this purpose is that the silver ions are loaded onto some kinds of inorganic carriers through ions exchange or adsorption process. The carriers include usually so called porous materials such as zeolites, wollastonites, chlorites, ceramics, and insolubility phosphate, which can coalescence closely with metal ions. Silver ions loaded into the porous material can prevent silver ions from releasing fast and result in reducing discolouration, and meanwhile, the durability for antibacterial will be kept.

The Chinese patent (CN99114417.1) disclosed an inorganic antimicrobial agent of silver loaded composite and it's preparing method, in which the phosphate is used as carrier and the silver ions as antimicrobial molecule through the process of ion exchange, adsorption or oxidation-reduction. EP.937398 disclosed a process of manufacturing antibacterial and deodorant materials by adhering silver and copper ions onto the titanium oxide particles.

Zinc-contained antimicrobial agent particularly the zinc oxide as its major representative of the kind is another alternative inorganic antimicrobial agent. It has been proved by J. Sawai, a Japanese scientist (reference for example J. of Microbiological Methods, 2003, 54: 177-182) that the active oxygen is actually contained in the crystal lattice of zinc oxide, which makes people have more confidence for further developing this kind of antimicrobial agents. But until now, the antibacterial activity of the pure ZnO is still not as good as that of silver ion.

The patent (JP.8-133918) disclosed a method for preparing an antimicrobial agent containing silver ions. The said method comprises adhering the silver sulphate into silica gel and calcium phosphate by adsorption and ion exchange techniques, and then mixing the result with the tetra-needle shaped zinc oxide to obtain the antimicrobial composite agent. Silver ions are the main activity component in the composites, while the T-ZnO just plays a role of carrier. This invention doesn't disclose any information about the silver ions being loaded into the crystal lattice of ZnO.

### SUMMARY OF THE INVENTION

Accordingly, the object of the invention is to provide an Ag-co-Zn antimicrobial agent having silver ions loaded in the crystal lattices of zinc oxides and a method for preparing the same.

The antimicrobial agent according to this invention comprises a semiconducting zinc oxide and sliver ions loaded in the crystal lattice of the said zinc oxides through a solid solution process at high temperature.

According to one embodiment of this invention, the antimicrobial agent contains one or more than one kinds of zinc oxides selected from a group consisting of tetra-needle shaped zinc oxide whiskers, nano-sized zinc oxide particles and micro-sized zinc oxide particles. As to the zinc oxides, the micro-sized particles preferably have a particle size of less than 5µm; nano-sized particles have a particle size from 5 to 50 nm; the tetra-needle shaped zinc oxide is a single crystal that is 1 to 100µm in needle's length and 0.05 to 10 µm in basal diameter.

As a semiconductor dopant, only a little amount of silver ions needs to be introduced into the crystal lattice to change the forbidden band gap of ZnO. According to one embodiment of the present invention, the content of the silver ions in the antimicrobial agents is preferably between 0.1% and 10% by weight, more preferably, the content of silver ions is between 0.2% and 6.0%, and the rest portion in the antimicrobial agent is zinc oxides.

Furthermore, the antimicrobial agent comprises tetra-needle-shaped zinc oxide and silver ions, in which the content of silver ions is from 0.2% to 1.0% by weight.

The silver ions of the antimicrobial agent can be supplied from various kinds of compounds such as silver nitrate, silver sulfate, silver carbonate, silver chloride and silver oxide, which can release silver ions solely or jointly.

The method for preparing the antimicrobial agent according to the present invention comprises the steps of:
a, Weighting the raw materials of zinc oxides and silver ions according to the following proportion: zinc oxides 90 - 99.9% by weight, silver ions (from silver-contained compound) 0.1 ~ 10% by weight;
b, Dissolving the silver compounds in deionized water or dispersing the same to form a suspension;
c, Spraying the resulted solution or suspension onto the zinc oxide powders, then stirring continuously for 10 min to 30 min;
d, Drying the resulted mixture in a blast oven at 110 ~ 120°C for 60 min to 90 min;
e, Calcining the dried mixtures under nitrogen atmosphere at 600 ~ 1000°C for 30 min to 180 min to obtain the antimicrobial agent.

The traditional Ag-co-Zn composite antimicrobial agents are usually prepared by physically mixing the zinc oxides and silver compounds, and its antibacterial activity is attributed to both zinc ions and silver ions. The problems of discolouration and durability couldn't be resolved completely and the antibacterial activity of zinc ion couldn't be enhanced fundamentally.

The method of loading the sliver ions into the crystal lattice of zinc oxide according to this invention can make an atomic-level dispersion for silver ions and the zinc oxides , and synchronously confines them in the lattices so that the discolouration of the antimicrobial agent can be avoided.

On one hand, the silver ions loaded in the zinc oxide lattice would show antibacterial activity when they contact the bacteria, on the other hand being even more important effect, the silver ions doped in the crystals lattice will play a role of being used as a electron acceptor. The valence electrons will be excited from the valence band to conduction band or defective energy level in case of receiving energy by light radiation, heating or other ways of energy supply. When the electrons has been excited and separated from the ground state, they may be captured by silver ions, which leave holes with positive charges in the valence band of zinc oxide. As a kind of antibacterial active centres, the said holes with positive charges and the free radicals resulted from the electron separation show a high-efficiency and broad-spectrum for antibacterial action. Moreover, the energy and width of forbidden energy band of zinc oxide will be changed due to the loading of the silver ions, which is helpful for the transition of valance electron. The generation of electron-hole pairs prompts the generation and enhances the stability of the active centres. This is the main mechanism and principle of the Ag-co-Zn composite antimicrobial agent according to this invention.

According to the present invention, various zinc oxides with different structure, morphology, dimension and size, such as micro-sized particles, nano-sized particles, nanowires, needle crystals, sheet crystals, single crystals and microcrystal, etc. can be used solely or jointly in this invention.

According to one embodiment of the present invention, the zinc oxides used as the carrier of silver ions and also having antibacterial effect co-working with the silver ions, are one or more than one kinds of the substances particularly selected from a group consisting of the tetra-needle shaped whiskers, microparticles and nanoparticles, which have different structures, morphologies and sizes. The particle size, morphology and crystalline type may affect the antibacterial activity of the doping product. The effect can be modulated and controlled by changing the amount of silver ions and the doping techniques.

Single crystalline zinc oxide, such as tetra-needle shaped zinc oxide whiskers, shows higher antibacterial activity even if a little amount of silver ions is doped. Nano-sized zinc oxide particles are difficult to be doped with silver ions, and the particle size will increase during the doping process. The more the silver ions be loaded and the more quick the calcine procedure be carried out, the better antibacterial effect can be obtained. Micro-sized zinc oxide particles show weaker antibacterial activity and more silver ions are needed in order to improve the antibacterial activity. But the antibacterial activity will be weakened if too large amount of silver ions are loaded due to the segregation of second phase, single substance of silver, which appears for the crystal structure of zinc oxide microparticles is complicated, and the sites and quantities of the silver ions loaded into the crystal lattice of zinc oxide are not regular.

So according to an embodiment of this invention, zinc oxide microparticles in the antimicrobial agent have a particle size of less than 5µm; zinc oxide nanoparticles have a particle size from 5 to 50 nm; the tetra-needle shaped zinc oxide is single crystal, which is 1 to 100µm in length and has a root diameter of 0.05 to 10 µm.

According to the present invention, the silver ions are loaded into the lattice of zinc oxides by calcining at 600-1000 °C for 30 to 180 min under the atmosphere of nitrogen thereby the present invention not only can prohibit silver ions from releasing and discolouring, but also can effectively maintain the antibacterial activity. There is not sufficient energy for silver ions being loaded into the lattice of zinc oxides in case that temperature is lower than 600°C. However, when the temperature is higher than 1000°C, the crystalline structure of zinc oxides might be changed and it is difficult to load silver ions into the lattice of zinc oxide because the second phase of single substance of silver may generate and reduce the antibacterial effect of the composites.

The Ag-co-Zn antimicrobial agent with silver ions loaded in the lattice of zinc oxides shows satisfying antibacterial effect. The minimum inhibitory concentrations (MIC) values of *Staphylococcus aureus, Escherichia coli* and *Endomyces albicans* are in range from 50 to 800 PPM. The antibacterial activity highly depends on the kinds of zinc oxide and the quantity of silver directly (refer to the examples). As for the antibacterial effect, the zinc oxide whisker with single crystal structure and tetra-needle shape has the most preferable antibacterial effect as compared to nano-sized particles and micro-sized particles thereof. The more the silver ions are loaded, the better the antibacterial effect will be achieved, in the case of no second phase generation. However, when the loaded silver ions are more than 10%, the colour of the products turns grey or brown as a result of the second phase of single substance of silver generated on the surface of zinc oxides.

The Ag-co-Zn antimicrobial agent according to present invention has better colour stability, which is proved by the experiments of heat treatment in air at 600°C for 30min, being irradiated with ultraviolet rays having a wavelength of 320 nm for 30 min and natural light for 36 h, respectively.

The antimicrobial agent according to present invention has no irritation on skins or eyes of the experimental mice. The oral toxicity test on mice indicated that the values of the median-lethal-dose (LD50) of related doped products powders were more than 5000mg/Kg, which demonstrated that they were nonpoisonous.

In summary, the antimicrobial agent with silver ions loaded in crystal lattice of zinc oxides comprises semcoductive zinc oxides and silver ions, in which the content of silver ions is of 0.1 to 10% by weight, and the rest portion in the said antimicrobial agent is zinc oxides. The silver ions have two main functions, one is the antibacterial effect by itself, and the other is to act as electron acceptors and change the energy level of zinc oxides through the silver ions being loaded into the lattice of zinc oxide so as to generate more antibacterial active centers to enhance the antibacterial activity of zinc oxides.

The Ag-co-Zn antimicrobial agent according to present invention solves not only the problems of discolorations and insufficient durability of silver-contained antimicrobial agent, but also the problems of unsatisfying antibacterial activity of zinc-contained antimicrobial agent in the prior art. The Ag-co-Zn antimicrobial agent of the present invention has broad-spectrum, high efficiency, sufficient durable antibacterial activity and high safety and will become a new type of inorganic antimicrobial agent used in various applying fields.

### BRIEF DESCRIPTION OF THE DRAWINGS

Fig.1: TEM image of ZnO nanoparticles (n-ZnO);
Fig.2: (a) SEM image and (b) Electron diffraction pattern of tetra-needle shaped ZnO whisker (T-ZnO whiskers);
Fig.3: XRD pattern of (a) zinc oxide microparticles, (b) zinc oxide nanoparticles and (c) tetra-needle shaped ZnO whiskers;
Fig.4: XRD pattern of silver-loaded samples before calcining of (a) zinc oxide microparticles with silver nitrate, (b) zinc oxide nanoparticles with silver carbonate and (c) tetra-needle shaped ZnO whiskers with silver chloride;
Fig.5: XRD pattern of silver-loaded products of (a) zinc oxide microparticles (b) zinc oxide nanoparticles and (c) tetra-needle shaped ZnO whiskers.

### DETAILED DESCRIPTION OF THE PREFERRED EMBODIMENT

The method for preparing the sample of antimicrobial agent according to the present invention includes the following steps in which different starting materials and preparing conditions as showing in the examples 1~8:
a. Weighing raw materials according to the proportion by weight shown in Table 1.
b. Dissolving the silver compounds in deionized water or dispersing them to suspensions.
c. Spraying the resulting solution or suspension onto the zinc oxide powders, then continuously stirring for 10 min to 30 min.
d. Drying the obtained mixture in an blast oven at 110 ~ 120°C for 60 min to 90 min.
e. Calcining the dried mixtures under nitrogen atmosphere at the provided temperature for an appropriate time according to Table 1, ensure that silver ions are loaded into the crystal lattice of ZnO to obtain the antimicrobial agent.

The antibacterial effect and safety test of the products are carried out according to Technical Standard For Disinfection of the Ministry of Health People's Republic of China(2002 edition).

### [Example 1~8]

**Table 1 Composition of raw materials and preparing condition of examples for preparing Ag-co-Zn antimicrobial agent of the present invention.**

| Sample number | | 1 | 2 | 3 | 4 | 5 | 6 | 7 | 8 | remark |
|---|---|---|---|---|---|---|---|---|---|---|
| Composition of raw materials | P-ZnO (%) | 90 | 98 | 0 | 0 | 0 | 0 | 0 | 30 | |
| | n-ZnO (%) | 0 | 0 | 94 | 98.5 | 0 | 0 | 11.7 | 30 | |
| | T-ZnO whiskers (%) | 0 | 0 | 0 | 0 | 99 | 99.8 | 88.2 | 38 | |
| | Silver iron(%) | 0 | 2.0 | 0 | 1.5 | 0 | 0.1 | 0 | 0.5 | Silver nitrate |
| | Silver iron(%) | 6.0 | 0 | 6.0 | 0 | 0 | 0.1 | 0.1 | 1.0 | Silver carbonate |
| | Silver iron (%) | 4.0 | 0 | 0 | 0 | 1.0 | 0 | 0 | 0.5 | Silver chlorite |
| Preparing method | Drying temperature (□) | 120 | 110 | 115 | 118 | 120 | 112 | 115 | 120 | |
| | Drying time (min) | 80 | 90 | 70 | 75 | 85 | 90 | 65 | 75 | |
| | Calcine tempreture (□) | 1000 | 850 | 600 | 800 | 800 | 900 | 780 | 850 | |
| | Calcine time (min) | 180 | 120 | 120 | 90 | 120 | 60 | 30 | 60 | |

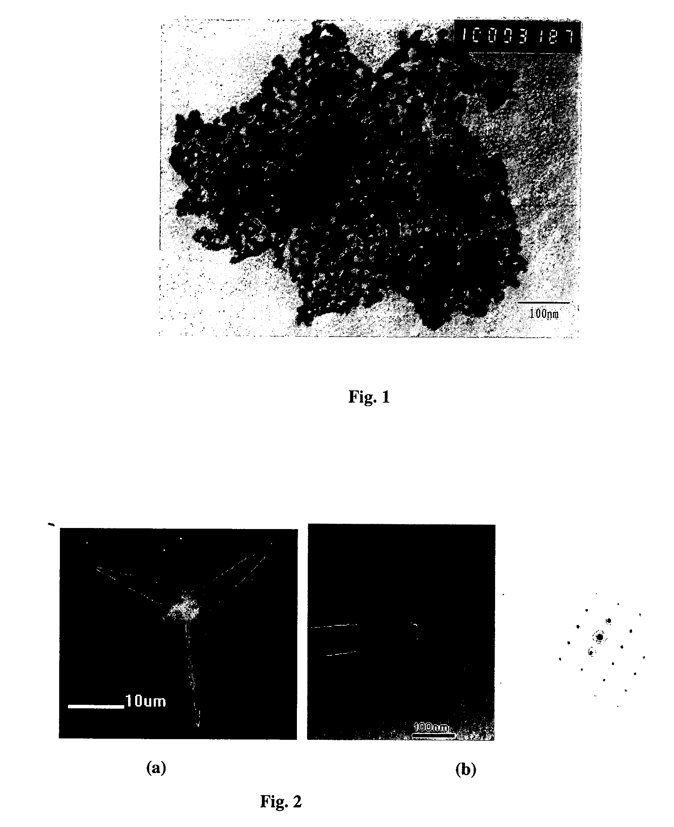

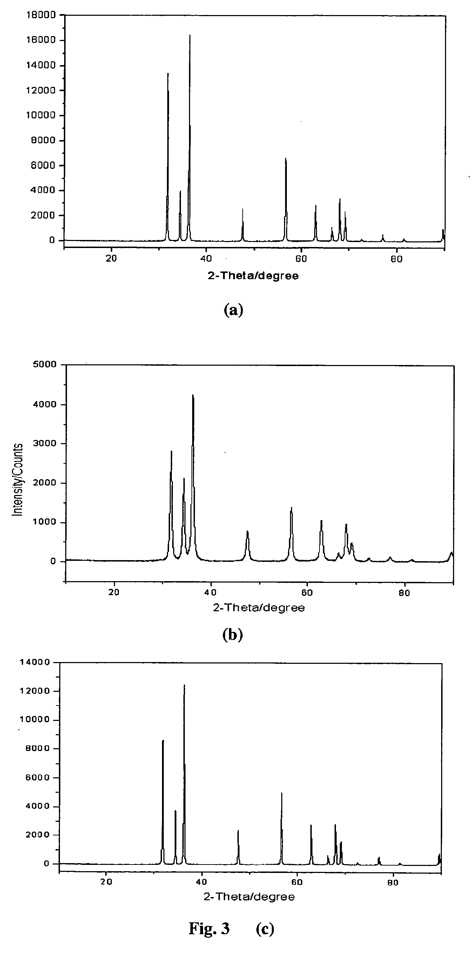

Transmission Electron Microscope image of ZnO nanoparticle is showed in Fig.1.Scan Electron Microscope (a) and Electron diffraction pattern(b) of tetra-needle like ZnO whisker are showed in Fig.2.

XRD pattern of zinc oxide microparticles(a), zinc oxide nanoparticles(b) and tetra-needle shaped ZnO whiskers(c) are showed in Fig.3.

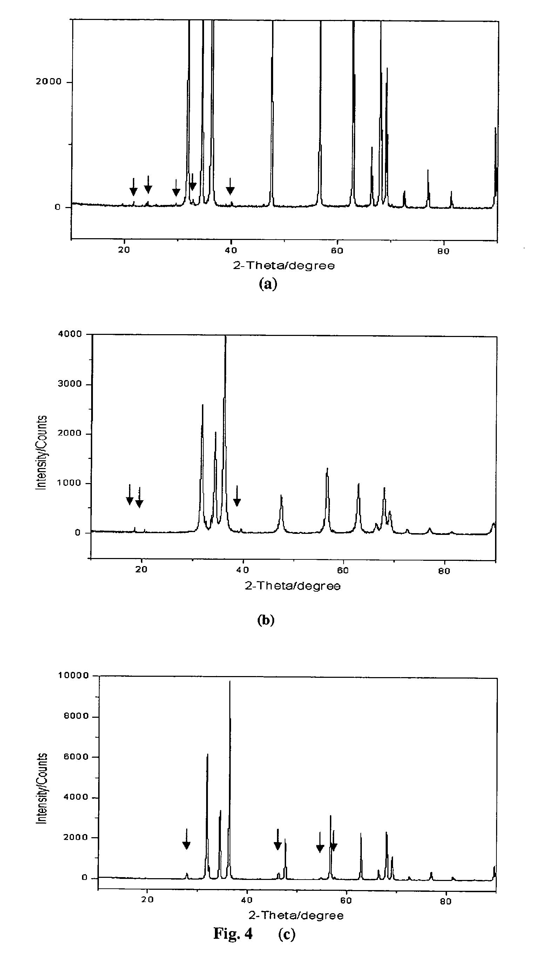

XRD pattern of silver-loading samples before calcinating of micro-sized zinc oxide particles (P-ZnO) (a), nano-sized zinc oxide particles (n-ZnO) (b) and tetra-needle shaped zinc oxide whisker (T-ZnO) (c) are showed in Fig.4 (refer to example 2, example 3 and example 5, respectively), the arrows relate to the characteristic peaks of the silver nitrate, the silver carbonate and the silver chlorite.).

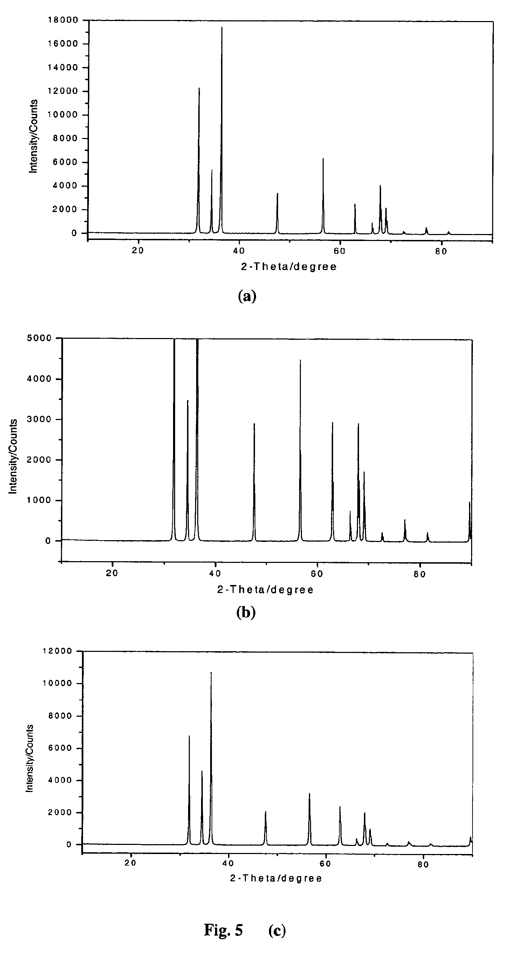

XRD pattern of silver-loading products of zinc oxide microparticles(a), zinc oxide nanoparticles(b) and tetra-needle shaped ZnO whiskers(c) are showed in Fig.5.

Comparing the XRD patterns of Fig. 4 and Fig. 5, it can be found that there are no characteristic peaks of silver or silver salts in the XRD spectra for the samples after calcined (see Fig.5.), though obvious characteristic peaks of silver salts are observed in those of the samples before calcining. There are characteristic peaks of silver nitrate at 2θ = 19.24° , 2θ = 21.64° , 2θ = 24.22° , 2θ = 29.59° , 2θ = 32.71 °in Fig. 4(a); characteristic peaks of silver carbonate at 2θ = 18.55 °, 2θ = 20.53° , 2θ = 39.55°in Fig.4(b); characteristic peaks of silver chlorate at 2θ = 27.85° , 2θ = 46.30° , 2θ = 54.85° , 2θ = 57.52°in Fig. 4(c). These facts demonstrate that the silver ions may be doped into the lattice of zinc oxides. Moreover, the standard lattice constants of ZnO are as follows: a=3.2468, c=5.2059, but according to the XRD patterns, the lattice constants of silver-loaded products are: a=3.2542-3.2597, c=5.2116-5.2141, which are higher than those of pure ZnO. From the increment of lattice constants, it can also be noted that the silver ions are doped in the lattice of ZnO. As the radius of Ag+ for coordination number 6 is 126 pm, which is higher than that of Zn2+ that is only 74 pm, so when silver ions substitutes the zinc ions in the crystal lattice, the crystalline distortion is distinct and the ions in the lattice will be rearranged. As a result, the lattice constants of the silver loaded zinc oxides crystals increase.

Table 2 gives the prescription of comparison examples 1-5, in which the preparing procedures are same to those of examples, except that the calcinating process.

**Table 2 Composition of raw materials and preparing conditions for the comparison.**

| Sample number | | 1 | 2 | 3 | 4 | 5 | remark |
|---|---|---|---|---|---|---|---|
| Raw materials | P-ZnO (%) | 94 | 0 | 0 | 0 | 30 | |
| | n-ZnO (%) | 0 | 94 | 0 | 11.7 | 30 | |
| | T-ZnO whiskers(%) | 0 | 0 | 99 | 88.2 | 38 | |
| | Silver iron(%) | 0 | 6.0 | 0 | 0 | 0.5 | Silver nitrate |
| | Silver iron(%) | 6.0 | 0 | 0 | 0.1 | 1.0 | Silver carbonate |
| | Silver iron(%) | 4.0 | 0 | 1.0 | 0 | 0.5 | Silver chloride |
| Preparing method | Drying temperature (□) | 120 | 115 | 120 | 115 | 120 | |
| | Drying time (min) | 80 | 70 | 85 | 65 | 75 | |
| | Cacinating (□) temperature (□) | Not cacinated | 500 | 200 | 1200 | Not cacinated | |
| | Cacining Time (min) | | 120 | 90 | 180 | | |

Table 3 presents the main properties and antibacterial effect of Ag-co-Zn antimicrobial agents according to the present invention.

**Table 3 The antibacterial effect (MIC, PPM) and main properties of Ag-co-Zn antimicrobial agents of the present invention**

| number | MIC (PPM) | | | discoloration | | |
|---|---|---|---|---|---|---|
| | *Staphylococcus aureus* ATCC 25922 | *Escherichi a coli* ATCC 6538 | *Candida albicans* ATCC 10231 | Natural light for 36 h | Ultraviolet light at 320 nm for 30 min | Heat treating at 600□ for 30 min |
| Example 1 | 350 | 450 | 600 | white | white | white |
| Example 2 | 400 | 550 | 800 | white | white | white |
| Example 3 | 200 | 250 | 400 | white | white | white |
| Example 4 | 300 | 350 | 450 | white | white | white |
| Example 5 | 50 | 50 | 150 | white | white | white |
| Example 6 | 125 | 200 | 200 | white | white | white |
| Example 7 | 75 | 100 | 125 | white | white | white |
| Example 8 | 50 | 75 | 200 | white | white | white |
| Comparison 1 | 800 | 1200 | 1600 | gray | deep gray | brawn |
| Comparison 2 | 750 | 1000 | 1600 | light black | black | brownish black |
| Comparison 3 | 600 | 800 | 1200 | light gray | gray | black brown |
| Comparison 4 | 750 | 750 | 1000 | gray | deep gray | brown |
| Comparison 5 | 850 | 800 | 1200 | gray | deep gray | brown |

From Table 3, it demonstrates that the MIC values of antimicrobial agent the silver loaded in zinc oxides prepared according to this invention are in range of 50-600 PPM, so the antimicrobials agent appears favourable antibacterial effect. Besides, the results for the experiments of light irritation and heat resistance imply that this kind of antimicrobial agent are of significant resistant to light-induced and heat-induced discolouration, while the comparison samples are worse in all aspects.

Accordingly, the Ag-co-Zn antimicrobial agent of the present invention comprises semiconductive zinc oxides and silver ions loaded in crystal lattice of the said zinc oxides through a solid state reaction procedure. The Ag-co-Zn antimicrobial agent of the invention solves not only the problems of discolouration, stability and durability of silver-contained antibacterial agents, but also the insufficient antibacterial effect of pure zinc-contained antimicrobial agents as well. The Ag-co-Zn antimicrobial agents possess broad-spectrum, high efficient and durable antibacterial effect with high safety, and can be widely applied to various fields as a new type of inorganic antimicrobial materials.

## Claims

1. An antimicrobial agent comprising semiconducting zinc oxides and silver ions loaded into the crystal lattices of the said zinc oxides through a solid solution processing at high temperature.

2. An antimicrobial agent according to claim 1, in which the zinc oxides are one or more than one kinds of substrates selected from a group consisting of tetra-needle shape whiskers, nano-sized particles and micro-sized particles.

3. An antimicrobial agent according to claim 2, in which the zinc oxide microparticles have a particle size of less than 5µm; the zinc oxide nanoparticles have a particle size from 5 to 50 nm; the tetra-needle shaped zinc oxide is a single crystal that is 1 to 100µm in length and 0.05 to 10 µm in basal diameter.

4. An antimicrobial agent according to any one of claims 1 to 3, in which the said antimicrobial agent comprises the silver ions of 0.1% to 10% by weight and one or more kinds of zinc oxides as the rest portion in the antimicrobial agent.

5. An antimicrobial agent according to claim 4, in which the content of the silver ions in the said antimicrobial agent is 0.2% to 6% by weight.

6. An antimicrobial agent according to in claim 5, in which the content of silver ions in the said antimicrobial agent is 0.2% to 1% by weight, and the said antimicrobial agent is consisting of tetra-needle shaped zinc oxide and silver ions.

7. An antimicrobial agent according to any one of claims 1 to 6, in which the silver ions are supplied from one or more kinds of silver-contained compounds selected from a group consisting of silver nitrate, silver sulfate, silver carbonate, silver chloride and silver oxide.

8. A method for preparing the antimicrobial agent according to any one of claims 1 to 7 comprising the steps as follows:
a, Weighting the raw materials of zinc oxides and silver ions according to the following proportion: zinc oxides 90 - 99.9% by weight, silver ions 0.1 - 10% by weight;
b, Dissolving the silver compounds in deionized water or dispersing the same to form a suspension;
c, Spraying the resulted solution or suspension onto the zinc oxide powders, then stirring continuously for 10 min to 30 min;
d, Drying the resulted mixture in a blast oven at 110 ~ 120°C for 60 min to 90 min;
e, Calcining the dried mixtures under nitrogen atmosphere at 600 ~ 1000°C for 30 min to 180 min to obtain the antimicrobial agent.
